Europäisches Patentamt

European Patent Office

Office européen des brevets

(19)

(11) **EP 1 441 398 A1**

(12) **EUROPÄISCHE PATENTANMELDUNG**

(43) Veröffentlichungstag:
   **28.07.2004  Patentblatt 2004/31**

(51) Int Cl.⁷: **H01L 41/04**, B26B 19/28

(21) Anmeldenummer: **03100158.9**

(22) Anmeldetag: **27.01.2003**

(84) Benannte Vertragsstaaten:
   **AT BE BG CH CY CZ DE DK EE ES FI FR GB GR HU IE IT LI LU MC NL PT SE SI SK TR**
   Benannte Erstreckungsstaaten:
   **AL LT LV MK RO**

(71) Anmelder: **Koninklijke Philips Electronics N.V.**
   **5621 BA Eindhoven (NL)**

(72) Erfinder:
   • **Diefenbach, Gerhard**
     **52088, Aachen (DE)**

   • **Reichinger, Christian**
     **52088, Aachen (DE)**
   • **Steinbusch, Hans**
     **52088, Aachen (DE)**
   • **Wendt, Matthias**
     **52088, Aachen (DE)**

(74) Vertreter: **Volmer, Georg, Dipl.-Ing. et al**
   **Philips Intellectual Property & Standards GmbH,**
   **Postfach 50 04 42**
   **52088 Aachen (DE)**

(54) **Piezoelektrische Antriebsvorrichtung und ein Regelverfahren für eine piezoelektrische Antriebsvorrichtung**

(57)    Eine piezoelektrische Antriebsvorrichtung und ein Regelverfahren für eine piezoelektrische Antriebsvorrichtung werden vorgestellt. Bisher bekannte piezoelektrische Antriebsvorrichtungen zeigen eine Charakteristik, bei der bei steigender Last die dem Motor zugeführte elektrische Leistung absinkt. Dieses Verhalten, das zu einer starken Einschränkung des Einsatzbereiches solcher Motoren führt, wird begegnet durch eine solche Vorgabe der Amplitude der Anregungsspannung, dass bei steigender Last die Wirkleistung nicht absinkt. Hierfür wird die elektrische Wirkleistung aus der Anregungsspannung und dem durch den piezoelektrischen Resonator fließenden Strom ermittelt. Alternativ kann bei vorgegebenem festen Phasenwinkel zwischen Anregungsspannung und Strom auch eine Regelung in der Weise erfolgen, dass der Strom auf einem konstanten Wert gehalten wird. Eine Weiterbildung der Erfindung bezieht sich auf eine Einrichtung zur Begrenzung des durch den piezoelektrischen Resonator fließenden Stroms, um eine Beschädigung dieses Bauteils zu vermeiden.

FIG. 6

EP 1 441 398 A1

**Beschreibung**

Die Erfindung betrifft eine piezoelektrische Antriebsvorrichtung und ein Regelverfahren für eine piezoelektrische Antriebsvorrichtung sowie einen elektrischen Rasierer.

Piezoelektrische Antriebsvorrichtungen dienen als elektrische Antriebe zur Umsetzung von elektrischer in mechanische Energie unter Ausnutzung des Piezo-Effektes. Hierdurch wird ein Bewegungsglied, beispielsweise eine Welle oder ein Läufer angetrieben. Ein mechanischer Resonator mit piezoelektrischer Anregung wird durch Zuführung einer oder mehrerer Wechselspannungen geeigneter Amplitude und Frequenz zu mechanischen Schwingungen angeregt und treibt hierbei das Bewegungsglied an.

Bekannte piezoelektrische Antriebsvorrichtungen umfassen sowohl Antriebe zur longitudinalen Verschiebung eines Bewegungsgliedes, beispielsweise der Verschiebung eines Lese/Schreibkopfes bei einem CD-Laufwerk, als auch zum drehenden Antrieb einer Welle.

Dem Fachmann sind hierbei verschiedene Varianten des Aufbaus von piezoelektrischen Antriebsvorrichtungen bekannt, die alle auf der elektrischen Anregung von Schwingungen eines oder mehrerer piezoelektrischer Resonatoren beruhen.

Ein bekannter Aufbau von piezoelektrischen Antriebsvorrichtungen wird als Wanderwellenmotor bezeichnet. Derartige Antriebe sind beispielsweise in der EP-A-0 654 889 oder in der US-A-4,888,514 beschrieben. Bekannte Wanderwellenmotoren werden mit zwei phasenverschobenen Wechselspannungen angeregt. Eine erste Wechselspannung erzeugt auf einem dadurch piezoelektrisch angeregten mechanischen Resonator eine erste stehende Welle. Eine zweite Spannung, die zur ersten Spannung phasenverschoben ist, erzeugt eine zweite stehende Welle. Weisen die beiden Wellen einen geeigneten räumlichen und zeitlichen Versatz auf, bildet sich eine umlaufende Welle (Wanderwelle) aus.

Eine andere bekannte Variante von piezoelektrischen Antriebsvorrichtungen ist der sog. Mikrostoßmotor. Durch Anregung mit einer Wechselspannung wird piezoelektrisch ein mechanischer Resonator zu mechanischen Schwingungen angeregt, wobei er periodisch gegen das Bewegungsglied stößt, und dieses so antreibt. Beispiele für Mikrostoßmotoren sind in der EP-A-0 633 616 und in der DE-A-198 17 038 beschrieben, wobei sich letztere mit dem mechanischen Aufbau eines solchen Piezomotors befasst.

Die Anregung der piezoelektrischen Elemente derartiger Antriebsvorrichtungen erfolgt durch Versorgung des Resonators mit einer oder mehreren Anregungs-Wechselspannungen. Hierfür sind verschiedene Ansteuerschaltungen bekannt. Diese erzeugen die für den Betrieb der Antriebsvorrichtung benötigten Wechselspannungen, wobei die Parameter - insbesondere Amplitude, Frequenz und bei mehreren benötigten Anregungsspannungen auch die Phase - der Anregungsspannungen so gewählt werden, dass der Resonator die gewünschte Antriebsfunktion erfüllt. Dies umfasst die Auswahl einer geeigneten Frequenz, so dass Resonanzen des Piezo-Elements angeregt werden.

So beschreibt die EP-A-0 633 616 für einen Mikrostoßmotor, der als Grundelement ein Plättchen aus piezoelektrischem Keramik-Material mit vier Elektroden aufweist, die Anregung jeweils diagonal gegenüberliegender Elektroden zur Erzeugung einer mechanischen Schwingung. Die Anregung erfolgt in Form von einer Wechselspannung oder einer gepulsten Spannung.

In der US-A-5 192 889 wird eine Ansteuerschaltung für einen Mikrostoßmotor beschrieben. Diese umfasst eine Einrichtung zur Erzeugung zweier hochfrequenter Wechselspannungen, die zueinander eine Phasendifferenz aufweisen. Es wird angegeben, dass für einen mit zwei stehenden Wellen betriebenen Motor eine Phasendifferenz von 90° angestrebt wird. Ferner wird angegeben, dass der Motor bei einer optimalen Anregungsfrequenz betrieben wird. Wenn diese sich, beispielsweise durch externe Last, verändert, wird die Phasendifferenz entsprechend nachgestellt. Vorgeschlagen wird eine Regeleinrichtung, die ausgehend von der Messung der Phasendifferenz zwischen Anregungsspannung und Strom durch ein Piezoelement die Phasenbeziehung der beiden Anregungsspannungen am ersten und zweiten Piezoelement so einstellt, dass die Spannung/Strom-Phase minimiert ist.

Die Ansteuerung eines Piezo-Wanderwellenmotors für den rotatorischen Antrieb ist auch in der EP-A-654 889 beschrieben. Demnach erfolgt ein Betrieb mit maximaler Effizienz bei einer bestimmten Anregungsfrequenz. Es werden verschiedene Regeleinrichtungen vorgestellt, die eine Regelung der dem Piezomotor zugeführten Anregungsspannungen erlauben. So wird einerseits die Amplitude dieser Wechselspannungen zwischen einem unteren und einem oberen Limit eingestellt. In einem Ausführungsbeispiel wird auch vorgeschlagen, dass die Frequenz dieser Wechselspannungen zwischen einem unterem und einem oberen Limit eingestellt wird. In einem weiteren Ausführungsbeispiel wird eine rückgekoppelte Regelung für die Drehgeschwindigkeit des Rotors beschrieben. Eine Messeinrichtung ermittelt die Drehgeschwindigkeit des Rotors, aus der eine Abweichung von einem Soll-Wert berechnet wird. Entsprechend wird die Amplitude der Wechselspannung eingestellt. Ein weiterer Aspekt der EP 0 654 889 befasst sich mit der Einstellung eines optimalen Betriebspunktes des Piezomotors, bei dem dieser mit maximalen Wirkungsgrad arbeitet. Hierfür wird vorgeschlagen, die Phasendifferenz zwischen einer Anregungsspannung und einer Überwachungsspannung zu messen und durch Variation der Anregungsfrequenz auf einen solchen Wert zu regeln, dass der Motor einen Betriebszustand mit optimalem Wirkungsgrad erreicht.

In der US-A-4,888,514 ist ebenfalls eine Ansteuerschaltung für einen Wanderwellen-Piezomotor beschrieben. Der Piezomotor wird durch Anlegen von zwei Anregungs-Wechselspannungen angeregt, zwischen denen eine Phasendifferenz von 10 - 170° erzeugt wird. Es wird angegeben, dass die elektrischen Eigenschaften eines Piezoelements durch ein Ersatzschaltbild modelliert werden können, in dem seine Anschlusskapazität parallel zu einer für die Vibration verantwortlichen Reihenschaltung einer Induktivität, einer Kapazität und eines ohmschen Widerstands liegt. Der Strom durch diesen Vibrationszweig des Ersatzschaltbildes, der proportional zur mechanischen Vibration ist, wird gemessen und mit einem voreingestellten Sollwert verglichen. Die Anregungsfrequenz wird nun so eingestellt, dass der Strom durch das Piezoelement und damit die Drehgeschwindigkeit im wesentlichen konstant bleibt. Allerdings ist einer Darstellung der Motorkennlinie zu entnehmen, dass die Drehgeschwindigkeit bei steigender Last abnimmt. Es ist angegeben, dass auch eine Regelung der Amplitude der Anregungsspannung erfolgen kann.

In der DE-A-199 42 269 ist ein Mikrostoß-Piezomotor und eine Ansteuerschaltung hierfür beschrieben. Diese Ansteuerschaltung kommt ohne eine spezielle Sensor-Elektrode am Piezoelement aus, in dem das für die Regelung erforderliche Rückkoppelsignal jeweils aus der passiven Steuerelektrode ermittelt wird. Die Ansteuerschaltung regt den piezoelektrischen Resonator jeweils mit einer solchen Frequenz an, dass dieser bei größtmöglicher Güte betrieben wird. In Kombination hiermit wird die Amplitude der Anregungsspannung geregelt. Hierfür wird entweder die Amplitude des Rückkoppelsignals oder die Phasendifferenz zwischen der Anregungsspannung und dem Rückkoppelsignal ausgewertet.

Eine weitere Ansteuerschaltung für einen Piezomotor ist in der JP-A-3-145 976 beschrieben. Hier wird der Phasenunterschied zwischen der Eingangs- und Ausgangsspannung einer in der elektrischen Zuleitung zum Motor eingebrachten Induktivität ermittelt und durch Einstellen einer entsprechenden Frequenz der Anregungsspannung geregelt.

In der JP-A-2-26 285 ist eine Ansteuerschaltung für einen Piezomotor angegeben. Der Strom, der von der Ansteuerschaltung durch die piezoelektrischen Resonatoren fließt wird durch Einstellung einer geeigneten Anregungsfrequenz auf einen konstanten Wert geregelt. Hierbei ist allerdings zu beachten, dass es so nicht möglich ist, den Motor ständig in einem Arbeitspunkt hohen Wirkungsgrades zu betreiben.

Die DE-A-100 08 937 beschreibt eine Phasenregelung für einen Piezomotor. Alternativ wird die Phasenlage der Anregungsspannung mit der Phasenlage des Stroms durch das Piezoelement verglichen, oder es wird die Phasenlage der Anregungsspannung mit der Phasenlage der Spannung an einer Sensorelektrode des Piezoelements verglichen. Über einen Regler wird die Frequenz der Anregungsspannung so eingestellt, dass eine gewünschte, von Null verschiedene Phasendifferenz entsteht.

Es ist Aufgabe der Erfindung, eine piezoelektrische Antriebsvorrichtung und ein Regelverfahren hierfür sowie einen elektrischen Rasierer anzugeben, bei denen die Ansteuerung des Motors in einer solchen Weise erfolgt, dass ein zufriedenstellender Betrieb auch bei variabler Last möglich ist.

Diese Aufgabe wird gelöst durch piezoelektrische Antriebsvorrichtungen nach den Ansprüchen 1 und 6 und einen elektrischen Rasierer hiermit nach Anspruch 9 sowie durch ein Regelverfahren für solche Antriebsvorrichtungen nach Anspruch 10. Abhängige Ansprüche beziehen sich auf vorteilhafte Ausführungsformen der Erfindung.

Erfindungsgemäß weist die Antriebsvorrichtung außer dem piezoelektrischen Resonator eine Ansteuerschaltung zur Versorgung des Resonators mit mindestens einer Anregungs-Wechselspannung auf, wobei die Amplitude dieser Anregungs-Wechselspannung so eingestellt wird, dass der Antriebsvorrichtung ausreichend Wirkleistung zugeführt wird. Die Erfindung geht hierbei von der Beobachtung aus, dass Piezomotoren, gleich welcher Bauart, bei einem Betrieb mit einer Anregungsspannung konstanter Amplitude bei steigender Last nicht mehr, sondern weniger Leistung aufnehmen. Dies äußerst sich darin, dass beispielsweise bei einem Piezomotor, der eine drehende Welle antreibt, bei stark steigender Last die Drehzahl rapide absinkt. Diese Motorcharakteristik unterscheidet den Piezomotor vom herkömmlichen Elektromotor, der, an konstanter Spannung betrieben, bei steigendem Drehmoment einen höheren Strom und damit höhere Leistung aufnimmt.

Lösungen des Standes der Technik, bei denen lediglich die Amplitude der Anregungsspannung erhöht wurde um beispielsweise Drehzahlschwankungen auszugleichen haben sich als nicht ausreichend erwiesen. Bei einem Piezomotor handelt es sich um eine komplexe, sich mit den Umgebungsbedingungen verändernde Last für die Ansteuerungselektronik. Daher ist die Abhängigkeit der Motorleistung von der Amplitude der Spannung keineswegs immer linear.

Gemäß Anspruch 1 wird daher die dem Resonator zugeführte Wirkleistung ermittelt und die Amplitude der Anregungsspannung so eingestellt, dass diese Wirkleistung bei steigender Last nicht absinkt. Dies umfasst eine solche Ansteuerung, dass die Wirkleistung bei steigender Last konstant bleibt. Bevorzugt wird jedoch eine Ausgestaltung, bei der die dem Motor zugeführte Eingangsleistung bei steigender Last ebenfalls ansteigt, so dass im Idealfall die Drehzahl weitgehend konstant gehalten werden kann.

Die oben erwähnte Einheit zur Ermittlung der Wirkleistung ist hierbei zunächst rein funktional zu verstehen, d. h. es muss sich nicht um eine separate Schaltung oder Baugruppe handeln, die allein diesem Zweck dient. Entscheidend ist vielmehr, dass die für die Berechnung der Wirkleistung notwendigen Informationen über die dem Resonator zugeführte Spannung und den durch den Resonator fließenden Strom vorliegen und geeignet verknüpft werden, so dass das Ziel einer bei Belastung mindestens konstant bleibenden Wirkleistung durch geeignete Einstellung der Amplitude der Anregungsspannung erreicht wird.

Die Regelung kann in der Form erfolgen, dass stets die Wirkleistung ermittelt wird und die Amplitude so eingestellt wird, dass die Wirkleistung konstant bleibt. Das Ziel, bei steigender Last einen Abfall der aufgenommenen Leistung zu verhindern, kann jedoch gemäß einer Weiterbildung auch erreicht werden, indem der jeweilige Sollwert für die Leistung nicht konstant ist, sondern jeweils ausgehend von den Messdaten eines Sensors bestimmt wird. Bevorzugt handelt es sich hierbei um einen Sensor für die Geschwindigkeit des Bewegungsgliedes des Motors, d.h. bei rotatorischem Antrieb um einen Drehzahlsensor. Ausgehend von den Kenntnissen über den jeweils verwendeten Piezomotor und die Vorrichtung, in der er eingesetzt ist, kann - z.B. in Form einer Tabelle, oder auch in Form einer mathematischen Funktion - eine Zuordnung erfolgen, bei der der jeweils gewünschte Leistungswert bei einer jeweils gemessenen Geschwindigkeit (bzw. Drehzahl) vorgegeben wird. Wird beispielsweise vom Drehzahlsensor gemeldet, dass der Motor mit Nenndrehzahl läuft, so wird als Sollwert für die Leistung die Nennleistung des Motors eingestellt. Zeigt die Messung der Drehzahl ein Absinken der Motorgeschwindigkeit, so wird beispielsweise über eine Tabelle vorgegeben, dass der Sollwert für die Motorleistung auf einen höheren Wert eingestellt wird. Dieser höhere Sollwert für die Motorleistung wird vom Fachmann im voraus bestimmt, wobei die Kenntnisse über die Motorkennlinie und die jeweilige Anwendung einfließen.

Hierbei ist zu beachten, dass der piezoelektrische Resonator keine rein ohmsche Last ist. Stattdessen liegt, wie auch aus dem Stand der Technik bekannt ist, im Allgemeinen ein variabler Phasenwinkel zwischen der Anregungsspannung und dem durch den Resonator fließenden Strom vor. Gemäß einer Weiterbildung der Erfindung, bei der von sinusförmigen Verläufen von Strom und Spannung ausgegangen wird, wird die Wirkleistung allgemein aus der Amplitude der Anregungsspannung, der Amplitude des Stroms und dem Phasenwinkel zwischen Anregungsspannung und Strom ermittelt. Dies kann durch getrennte Messung der genannten Größen und anschließende Berechnung erfolgen.

Gemäß einer Weiterbildung der Erfindung wird der Phasenwinkel jedoch nicht ständig gemessen, sondern die Ansteuerschaltung sorgt für eine solche Frequenz der Anregungsspannung, dass der Phasenwinkel auf einem bekannten Wert konstant gehalten wird. Ausgehend von diesem bekannten Wert für den Phasenwinkel kann die Wirkleistung besonders leicht durch Erfassung der Amplituden von Strom und Spannung berechnet werden. Da der Wert der Amplitude der Anregungsspannung erfindungsgemäß vorgegeben wird, kann er als bekannt vorausgesetzt werden und muss daher ebenfalls nicht mehr gemessen werden. Die Messung der Amplitude des durch den Resonator fließenden Stroms kann Vorteilhafterweise durch Erfassung des Maximalwerts dieser Größe erfolgen.

Bevorzugt erfolgt eine solche Regelung derart, dass der Motor stets im optimalen Betriebszustand, d. h. bei seiner mechanischen Resonanz betrieben wird.

In einer unabhängigen Lösung der Aufgabe gemäß Anspruch 5 dienen sowohl die Frequenz als auch die Amplitude der Anregungsspannung als Stellgrößen für eine Regelung. Während die Frequenz so vorgegeben wird, dass der Phasenwinkel auf einem konstanten Wert bleibt, wird die Amplitude der Anregungsspannung so eingestellt, dass die Amplitude des Stroms konstant bleibt. Die Amplitude des Stroms ist ein Maß für die Schnelligkeit der Verformung des elektrischen Resonators und somit für einen rotatorischen Antrieb in etwa proportional zur Drehzahl. Durch die Regelung der Amplitude des Stroms auf einen konstanten Wert wird somit die Drehzahl im wesentlichen konstant gehalten. Hierdurch ist sichergestellt, dass bei steigender Last die Wirkleistung steigt, denn bei steigender Last wird ein zunächst erfolgendes Absinken der Amplitude des Stroms durch eine Erhöhung der Amplitude der Anregungsspannung ausgeregelt. Bei steigender Spannung und gleichbleibendem Strom sowie (durch die Phasenregeleinheit fest vorgegebenem konstanten) Phasenwinkel kommt es so bei erhöhter Last effektiv zu einer Erhöhung der Wirkleistung.

Eine Weiterbildung der Erfindung bezieht sich auf den durch den piezoelektrischen Resonator fließenden Strom. Bei einer variablen Einstellung der Amplitude der Anregungsspannung kann der durch den piezoelektrischen Resonator fließende Strom stark zunehmen. Überschreitet der Strom einen für den jeweiligen Motor zu berechnenden oberen Grenzwert, kommt es mit hoher Wahrscheinlichkeit zur Zerstörung des Resonators. Gemäß einer Weiterbildung der Erfindung ist daher eine Einrichtung zur Begrenzung des durch den Resonator fließenden Stroms vorgesehen. Hierbei kann es sich um eine zusätzlichen Regelkreis handeln, der nur beim Überschreiten eines vorgegebenen kritischen Stromwertes aktiv wird und beispielsweise die Amplitude der Anregungsspannung in diesem Fall reduziert, so dass sich ein geringerer Strom einstellt und die Gefahr von Beschädigungen des Resonators verringert wird.

Nachfolgend werden Ausführungsformen der Erfindung anhand von Zeichnungen näher beschrieben. In den Zeichnungen zeigen:

Fig. 1    eine schematische Darstellung eines piezoelektrischen Resonators;

Fig. 2    eine teilweise schematische Darstellung eines piezoelektrischen Resonators mit einer Ansteuerschaltung;

Fig. 3a     eine Draufsicht auf einen piezoelektrischen Rotationsmotor;

Fig. 3b     eine Seitenansicht des Rotationsmotors aus Fig. 3a im Schnitt;

Fig. 4     eine schematische Darstellung eines piezoelektrischen Antriebes für einen Rasierer;

Fig. 5a     ein Ersatzschaltbild für einen freischwingenden piezoelektrischen Resonator;

Fig. 5b     ein Ersatzschaltbild für eine Resonator in einem Piezomotor;

Fig. 5c     ein gegenüber Fig. 5b vereinfachtes Ersatzschaltbild eines Resonators in einem Piezomotor unter der Annahme, dass der Motor bei seiner mechanischen Resonanz betrieben wird;

Fig. 6     ein Blockschaltbild einer ersten Ausführungsform der Erfindung mit einem Piezomotor und einer Ansteuerschaltung;

Fig. 7     ein Blockschaltbild einer zweiten Ausführungsform der Erfindung mit einem Piezomotor und einer Ansteuerschaltung;

Fig. 8     ein Blockschaltbild einer dritten Ausführungsform der Erfindung mit einem Piezomotor und einer Ansteuerschaltung.

Zunächst soll allgemein der Aufbau und die Funktionsweise von bekannten Piezomotoren erläutert werden.

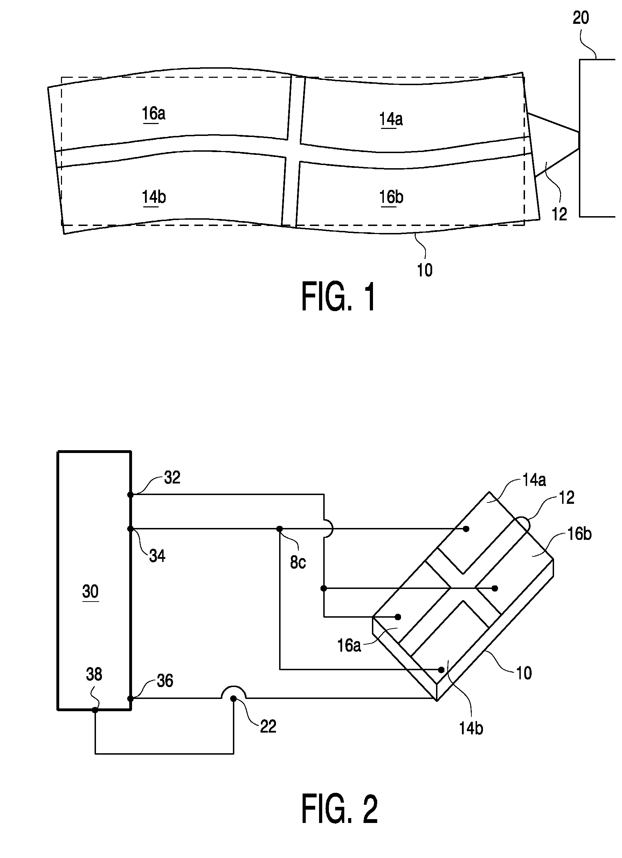

In Fig. 1 ist als Teil eines Piezomotors, der nach dem Mikrostoßprinzip arbeitet ein piezoelektrischer Resonator 10 dargestellt. Es handelt sich hierbei um ein flaches Plättchen aus piezoelektrischem Material. An der vorderen Schmalseite des Resonators 10 ist ein Stößel 12 angebracht, der gegen ein Bewegungsglied 20 gedrückt ist.

Auf der gezeigten Oberseite des Resonators 10 sind vier Elektroden 14a, 14b, 16a, 16b angeordnet. Hierbei bilden jeweils die diagonal angeordneten Elektroden 14a, 14b und 16a, 16b ein zusammengehörendes Paar. Auf der Rückseite des Resonators (nicht dargestellt) ist eine die gesamte Fläche ausfüllende Gegenelektrode angebracht.

Das Prinzip und die mechanische Funktionsweise eines piezoelektrischen Antriebs unter Verwendung eines solchen piezoelektrischen Resonators sind dem Fachmann bekannt und sollen deshalb hier nicht im Detail erläutert werden. In Fig. 1 sind die äußeren Kanten des Resonators im Ruhezustand gestrichelt eingezeichnet. Der - mit durchgehenden Linien gezeichnete - Resonator ist durch Anregung an den Elektroden verformt. Wie aus der übertriebenen Darstellung von Fig. 1 deutlich ist, kann der Resonator 10 durch Anlegen jeweils einer Spannung an die paarweise zusammen gehörigen Elektroden 16a, 16b bzw. 14a, 14b verformt werden. Durch Anregen der Elektrodenpaare 14a 14b (für die erste Bewegungsrichtung) bzw. 16a, 16b (für die entgegengesetzte Bewegungsrichtung) mit einer Wechselspannung geeigneter Frequenz lässt sich der Resonator 10 zu mechanischen Schwingungen anregen, die der Stößel 12 als Bewegungen auf das Bewegungsglied 20 überträgt.

In Fig. 2 ist allgemein eine Ansteuerschaltung 30 gezeigt, die an Anschlüssen 32, 34 sinusförmige Wechselspannungen gegenüber einem Anschluss 36 zur Verfügung stellt, mit denen der Resonator 10 angeregt wird. Der Anschluss 36 ist hierbei mit der Rückelektrode (nicht gezeigt) auf der Rückseite des Resonatorplättchens 10 verbunden. Je nach gewünschter Bewegungsrichtung wird an den Anschlüssen 32 oder 34 eine Wechselspannung erzeugt, um die Elektrodenpaare 14a, 14b oder 16a, 16b anzuregen. Die Ansteuerschaltung 30 kann hierbei sowohl die Frequenz als auch die Amplitude der Ansteuerspannungen an den Anschlüssen 32, 34 einstellen. Für jede Bewegungsrichtung wird hier der Resonator 10 nur mit einer Wechselspannung angeregt.

Zusätzlich ist in Fig. 2 ein Stromsensor 22 dargestellt, der den Strom I misst, der von der Rückelektrode zum Anschluss 36 fließt. Das Messsignal des Stromsensors 22 wird an einem Anschluss 38 der Ansteuerschaltung aufgenommen und zur Regelung verwendet, wie unten ausgeführt wird.

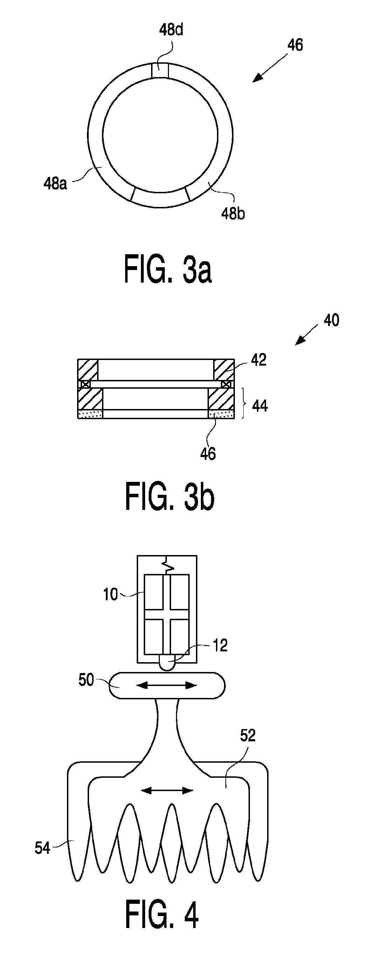

Eine weitere, dem Fachmann bekannte Ausführungsform von piezoelektrischen Motoren ist in den Fig. 3a, 3b dargestellt. Hierbei handelt es sich um einen elektrischen Wanderwellenmotor 40 für den rotatorischen Antrieb, wie er beispielsweise in der EP-A-0 654 889 beschrieben ist. Der Motor 40 besteht aus einem Rotor 42 und einem Stator 44 mit einem Piezoelement 46. Auf dem in Fig. 3a gesondert dargestellten Piezoelement 46 sind Antriebselektroden 48a, 48b sowie eine Gegenelektrode (nicht dargestellt) und eine Monitorelektrode 48d aufgebracht. Die Elektroden 48a, 48b werden mit zwei elektrischen Wechselspannungen einer Phasendifferenz von 90° angeregt, so dass eine Wanderwelle entsteht, die den Rotor 42 in Rotation versetzt.

In Fig. 4 ist ein Anwendungsbeispiel eines Mikrostoßantriebs zur Erzeugung einer longitudinalen Bewegung gezeigt, bei dem der Piezoantrieb in einem elektrischen Rasierer eingesetzt ist. Ein piezoelektrischer Resonator 10 treibt mit seinem Stößel 12 ein Bewegungsglied 50 longitudinal in Querrichtung an. Hierdurch kommt es zu einer Verschiebung eines ersten Scherblatts 52 gegenüber einem zweiten Scherblatt 54.

Die vorstehend erwähnten Beispiele von piezoelektrischen Resonatoren und daraus gebildeten piezoelektrischen Antrieben und ihren Einsatzmöglichkeiten sind hierbei lediglich der Anschaulichkeit halber dargestellt. Dem Fachmann sind eine Vielzahl von verschiedenen Piezoantrieben und Anwendungen dieser bekannt.

Im folgenden soll nicht mehr auf die dem Fachmann hinreichend bekannten Maßnahmen zur Erzeugung einer für den Antrieb eines Bewegungsglieds geeigneten Schwingung des Resonators eingegangen werden, sondern allgemein die elektrischen Eigenschaften solcher piezoelektrischen Antriebe untersucht werden.

Vom Permanentmagnet-Gleichstrommotor, der mit einer konstanten Versorgungsspannung betrieben wird, ist es bekannt, dass mit steigendem abgegebenen Drehmoment die dem Motor zugeführte Leistung steigt. Diese Motorcharakteristik hat sich bei vielen Anwendungen als außerordentlich vorteilhaft erwiesen. Vergrößert sich das Drehmoment aufgrund von Lastschwankungen, so "zieht" der Motor automatisch mehr Strom und nimmt damit mehr Leistung auf, so dass das abgegebene Drehmoment steigt und die zusätzliche Belastung überwunden werden kann.

Eine Betrachtung der entsprechenden Charakteristik von piezoelektrischen Mikrostoßantrieben zeigt hier ein gänzlich anderes Verhalten. Bei konstant gehaltener Versorgungsspannung (Da es sich bei der Versorgungsspannung um eine Wechselspannung handelt, bezieht sich "konstant gehalten" hier auf die Amplitude.) nimmt mit steigendem abgegebenen Drehmoment die vom Motor aufgenommene Leistung ab. Dies schränkt die Verwendbarkeit des Motors für solche Anwendungen, bei denen mit Lastschwankungen gerechnet werden muss, stark ein. Wird beispielsweise ein Rasierer mit einem Piezomotor betrieben (vergl. Fig. 4), so ist der dem Motor entgegengebrachte mechanische Widerstand sehr variabel, je nach dem ob sich der Rasierer im Leerlauf befindet oder einzelne Haare bzw. evtl. einen dicken Bart schneidet. Praktisch äußert sich das geschilderte Verhalten dann darin, dass der Motor bei größerer Belastung leicht stehen bleibt.

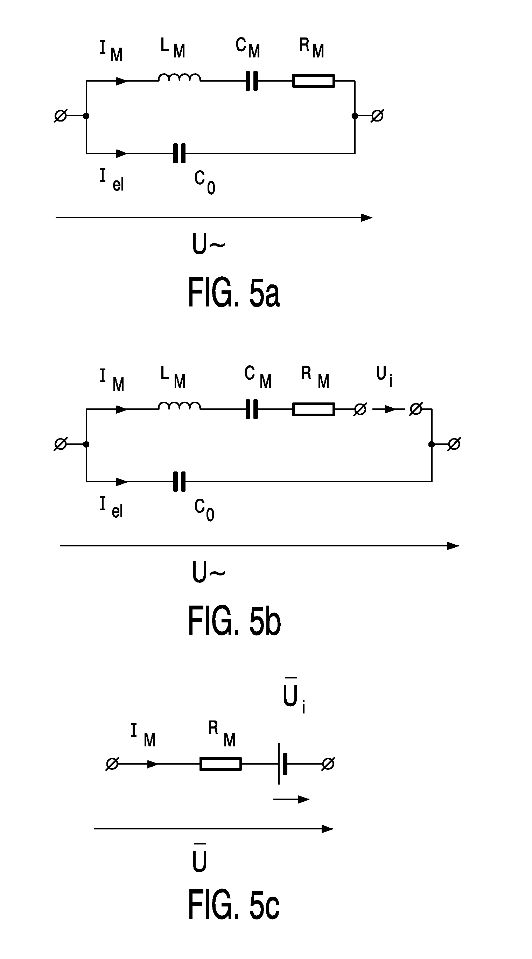

Prinzipiell kann dieses Verhalten durch die in den Fig. 5a-5c abgeleiteten Ersatzschaltbilder erklärt werden. Diese gelten für alle bekannten Typen von Piezomotoren.

Hierbei zeigt Fig. 5a das Ersatzschaltbild eines freischwingenden Piezoresonators aus einer Anschlusskapazität $C_0$ und einem mechanischen Zweig mit einer Induktivität $L_m$ (diese repräsentiert die schwingende Masse), einer Kapazität $C_m$ (repräsentiert die Steifigkeit) und einem ohmschen Widerstand $R_m$ (Dämpfung). Der Strom durch den mechanischen Zweig $I_m$ ist ein Maß für die Schnelle der Verformung, die durch das Anlegen der Wechselspannung U$\sim$ hervorgerufen wird.

Wie oben allgemein erläutert, stößt in einem Piezoantrieb der Resonator periodisch gegen ein als Läufer oder Rotor ausgebildetes Bewegungsglied. Fig. 5b zeigt ein Ersatzschaltbild eines solchen Resonators in einem Piezomotor. Dabei erzeugt der Resonator eine Stoßkraft, die im Ersatzschaltbild Fig. 5b durch eine interne Spannung $U_i$ berücksichtigt wird.

In einem vereinfachten Motorersatzschaltbild nach Fig. 5c erfolgt ein Übergang von den zeitlich sich ändernden Spannungen und Strömen hin zu gemittelten Werten, die in jedem Arbeitspunkt auf der Motorkennlinie konstant bleiben, unter der Annahme, dass der Motor in seiner mechanischen Resonanz betrieben wird.

Die Amplitude des Stroms $I_m$ in diesem Ersatzschaltbild ist eigentlich eine Funktion der Schnelle der Verformungen im Resonator. Da sich die Motordrehzahl aber aus der Schnelle der Verformungen ergibt, ist der Strom $I_m$ auch ein Maß für die Motordrehzahl (bei rotatorischen Anteilen) bzw. für die Vorschubgeschwindigkeit eines Läufers (bei longitudinalen Antrieben).

Die Spannung $\overline{U}i$ ist eine Funktion der vom Resonator aufgebrachten Stoßkraft. Da sich aus dieser Stoßkraft die vom Motor abgegebene Kraft bzw. das vom Motor aufgebrachte Drehmoment ergibt, ist diese Spannung auch ein Maß für die Kraft bzw. das Drehmoment.

Nimmt nun bei konstanter Versorgungsspannung $\overline{U}$ das vom Motor abgegebene Moment aufgrund von Lastschwankungen zu, dann steigt $\overline{U}i$. Der Spannungsabfall über $R_m$ wird geringer. Der Strom $I_m$ nimmt ab, was einer Drehzahlverringerung entspricht. Bei Zunehmenden Drehmoment nimmt daher die vom Piezomotor aufgenommene Leistung ab. Dies hat zur Folge, dass Mikrostoßmotoren der genannten Art, die für einen effizienten Betrieb in der Nähe der Leerlaufdrehzahl ausgelegt werden, bei Lastschwankungen auch große Drehzahlschwankungen aufweisen.

Um den Piezomotor auch für Anwendungen mit zu erwartenden großen Lastschwankungen einsetzten zu können, werden daher im folgenden drei Ausführungsformen einer Ansteuerschaltung beschrieben, bei denen die dem Motor zugeführte Anregungsspannung jeweils so eingestellt wird, dass bei steigendem Drehmoment am Motor die Motorleistung mindestens konstant bleibt oder sogar ansteigt.

Die folgenden Beispiele gehen dabei von einem Motor M aus, der einen piezoelektrische Resonator enthält. Dieser Resonator wird in den Beispielen mit nur einer Anregungs-Wechselspannung betrieben. Dennoch sind die Beispiele so zu verstehen, dass sie leicht auf sämtlich derzeit bekannten Typen von Piezomotoren zu verallgemeinern sind, z B. auch auf Piezomotoren mit mehreren Resonatoren, wie beispielsweise in der EP-A- 0 633 616 beschrieben. Wird ein Resonator verwendet, der nicht nur mit einer, sondern mit zwei (oder mehreren) Wechselspannungen angeregt wird, können die nachfolgenden Beispiele einerseits so angewendet werden, dass nur eine der Anregungsspannungen und der zugehörige Strom hinsichtlich der Leistung betrachtet werden. Die Amplitude der anderen Spannungen würde dann gleich der Amplitude der betrachtete Spannung gesetzt. Alternativ kann auch für jedes Paar aus Anregungsspannung und zugehörigem Strom eine separate Regelung erfolgen.

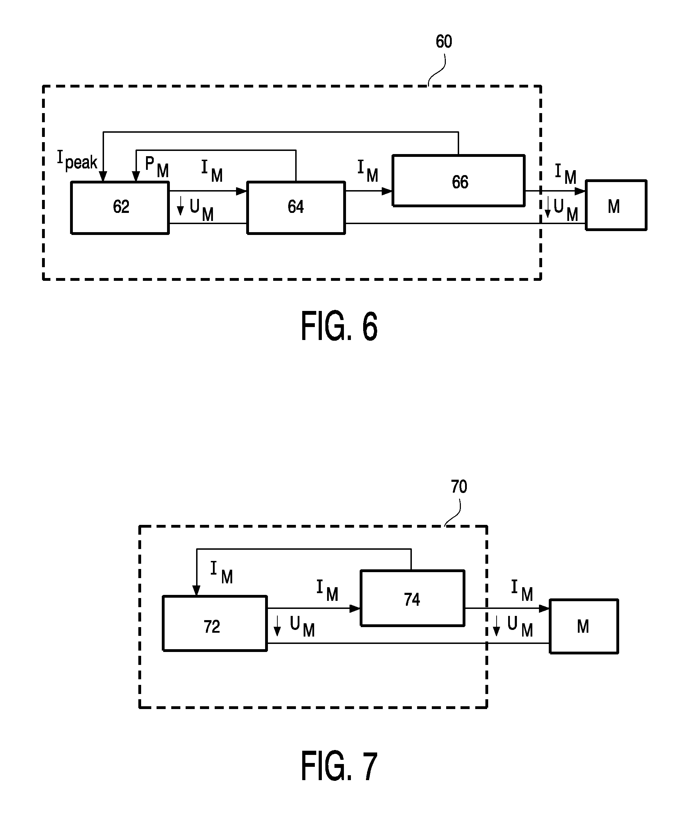

In Fig. 6 ist in einem Blockschaltbild eine erste Ausführungsform der Erfindung dargestellt. Ein Piezomotor M mit mindestens einem Piezoelement ist allgemein als Kasten dargestellt. Für diesen Piezomotor kommen sämtliche dem Fachmann bekannte Geometrien und Anordnungen von Piezoelementen in Frage.

Der Piezomotor M wird durch eine Ansteuerschaltung 60 gespeist. Diese umfasst eine geregelte Spannungsversorgungseinrichtung 62, eine Leistungsmesseinheit 64 und einen Spitzenstromsensor 66. Der Spitzenstromsensor 66 erfasst den Spitzenwert des von der Spannungsversorgungseinrichtung 62 zum Motor M fließenden Stroms $I_M$ und führt das Messergebnis der Spannungsversorgungseinrichtung 62 zu. Die Leistungsmesseinrichtung 64 ermittelt aus der von der Spannungsversorgungseinrichtung 62 dem Motor M zugeführten Anregungsspannung $U_M$ und dem durch den Motor M fließenden Strom $I_M$ die vom Motor M aufgenommene Wirkleistung $P_M$ und führt das Messergebnis der Spannungsversorgungseinrichtung 62 zu. Beide Messeinrichtungen, Leistungsmesseinrichtung 64 und Spitzenstrommesseinheit 66, werden hier als ideal angenommen, d. h. dass die gemessenen Spannungen und Ströme durch die Messung nicht verändert werden.

Die Anregungsspannung $U_M$ und der daraus resultierende Strom $I_M$ durch den Resonator sind jeweils sinusförmige Wechselgrößen. Entsprechend ist der Zeitverlauf der Anregungsspannung $U_M$ durch ihre Amplitude, Frequenz und Phasenlage vollständig festgelegt. Die hier folgende Regelung befasst sich zunächst nur mit der Regelung der Amplitude der Anregungsspannung $U_M$. Dem Fachmann sind entsprechende Schaltungen bekannt, bei denen die Amplitude und die Frequenz einer erzeugten Wechselspannung unabhängig voneinander vorgegeben werden können. Im vorliegenden Beispiel wird auf die Frequenz der Anregungsspannung $U_M$ nicht eingegangen. Diese muss vom Fachmann separat geeignet gewählt werden, so dass der Resonator zur Erzielung einer Antriebswirkung angeregt wird. Bevorzugt hat die Anregungsspannung $U_M$ eine solche Frequenz, dass der Resonator nahe seiner Resonanzfrequenz in einem stabilen Betriebspunkt mit möglichst hohem Wirkungsgrad betrieben wird, Idealerweise bei seiner mechanischen Resonanz.

Dem Fachmann sind Stromsensoren für die Messung des Stroms $I_M$ allgemein bekannt. Die Ermittlung des Spitzenwertes aus einer fortlaufenden Strommessung kann hierbei direkt in Form einer analogen Schaltung oder auch nachträglich, z. B. in numerischer Form erfolgen.

Die Leistungsmesseinrichtung 64 ermittelt aus dem Strom $I_M$ und der Spannung $U_M$ die vom Motor M aufgenommene Wirkleistung $P_M$. Hierbei wird von sinusförmigem Zeitverlauf und gleichen Frequenzen bei $I_M$ und $U_M$ ausgegangen. Die Ermittlung der Wirkleistung erfolgt dementsprechend durch Ermittlung der Amplitude des Stroms $\hat{I}_M$ und der Spannung $\hat{U}_M$ Durch bekannte Maßnahmen zur Phasendetektion, beispielsweise durch Vergleich der Nulldurchgänge, wird der Phasenwinkel φ ermittelt. Die Wirkleistung $P_M$ ergibt sich zu

$$P_M = \hat{U}_M * \hat{I}_M * \cos φ.$$

Die geregelte Spannungsversorgung 62 umfasst einerseits eine Regeleinheit und andererseits eine von der Regeleinheit gesteuerte Spannungsversorgungseinheit (nicht dargestellt). Die Regeleinheit verarbeitet die Messwerte $I_{PEAK}$ und $P_M$ und stellt die Amplitude der Anregungsspannung $U_M$ nach der folgenden Regelstrategie ein:

- Es wird überprüft, ob der Wert $I_{PEAK}$ unterhalb eines Maximalwertes $I_{MAX}$ liegt. Ist dies der Fall, wird der Wert $I_{PEAK}$ bei der weiteren Regelung nicht berücksichtigt. Überschreitet jedoch $I_{PEAK}$ den Wert $I_{MAX}$ wird die Amplitude der Spannung $U_M$ solange verringert, bis $I_{PEAK} < I_{MAX}$.

- Im Normalbetrieb des Motors, d. h. solange $I_{PEAK} < I_{MAX}$, wird die Amplitude von $U_M$ so geregelt, dass $P_M$ auf einem konstanten Sollwert $P_{M,Soll}$ bleibt. Hierfür wird aus $P_M$ und $P_{M,Soll}$ eine Regeldifferenz $P_M - P_{M,Soll}$ ermittelt und mit Hilfe einer der dem Fachmann hinlänglich bekannten Regelstrategien, beispielsweise eines P-, PI- oder PID-Reglers, ein Stellwert für die Amplitude der Spannung $U_M$ so eingestellt, dass die Regeldifferenz zu Null ausgeregelt wird. Hierzu wird die Amplitude von $U_M$ erhöht, wenn die Regeldifferenz negativ ist, also $P_M < P_{M,Soll}$. Ist die Regeldifferenz positiv, wird $U_M$ verringert.

Der jeweilige Maximalwert für den Strom $I_{MAX}$ wird für den jeweiligen Piezomotor M im voraus berechnet. Der durch einen piezoelektrischen Resonator fließende Strom ist hierbei proportional zur Schnelle der Verformung des Piezoelements. Ab einem Wert, der bei einem Längsschwinger einer linearen Dehnung von 1 Promille entspricht, entsteht eine erhöhte Gefahr von Beschädigungen des Piezoelements. Der entsprechende Wert $I_{MAX}$, bei dem eine solche Verformung eintritt, kann für den jeweils verwendeten piezoelektrischen Resonator berechnet werden.

Die Einrichtung zur Überwachung des Stromes $I_M$ und zur Vermeidung des Überschreiten des Grenzwerts $I_{MAX}$ ist hier nur in Verbindung mit der ersten Ausführungsform dargestellt. Diese Einrichtung kann auch weggelassen werden. Eine solche Einrichtung kann auch in allen Ausführungen der Erfindung eingesetzt werden, in denen aufgrund der variablen Einstellung der Amplitude der Anregungsspannung das Überschreiten des Maximalwertes $I_{MAX}$ nicht ausgeschlossen ist.

Bei der ersten Ausführungsform wird die vom Motor aufgenommene Leistung $P_M$ auf den Sollwert $P_{M, Soll}$ geregelt. Dieser Sollwert kann ein konstanter Wert sein, der beispielsweise der Nennleistung des Motors entspricht. In einer Abwandlung der ersten Ausführungsform (nicht dargestellt) wird der Sollwert $P_{M, Soll}$ variabel für den jeweiligen Betriebszustand des Motors vorgegeben. Hierfür ist ein Drehzahlsensor am Motor M vorgesehen, der einen Messwert für die Motordrehzahl liefert. Ausgehend von diesem Wert wird mit Hilfe einer Tabelle ein Vorgabewert für die bei der jeweiligen Drehzahl erforderliche Leistung ermittelt. Diese Leistung wird der Regeleinrichtung als Sollwert $P_{M, Soll}$ für die Wirkleistung vorgegeben.

Die entsprechende Tabelle wird für den jeweiligen Piezomotor und die jeweilige Anwendung im voraus berechnet. Hierbei werden einerseits die Motorkennlinie und andererseits die durch die jeweilige Anwendung gestellten Anforderungen berücksichtigt. Nachstehend ist eine solche Tabelle beispielhaft wiedergegeben für einen in einem elektrischen Rasierer verwendeten Piezomotor, der eine Welle mit einer Nenndrehzahl von 2000 U/min antreibt und für eine Nennleistung von 250 mW ausgelegt ist.

| Gemessene Drehzahl | $P_{M, Soll}$ |
|---|---|
| 1500 U/min | 400 mW |
| 1800 U/min | 300 mW |
| 2000 U/min | 250 mW |

In Fig. 7 ist ein Blockschaltbild einer zweiten Ausführungsform der Erfindung dargestellt. Wieder ist der Motor M allgemein als Kästchen repräsentiert, der von einer Ansteuerschaltung 70 mit einer Anregungsspannung $U_M$ versorgt wird, so dass ein Strom $I_M$ fließt.

Die Ansteuerschaltung 70 weist eine geregelte Spannungsversorgungseinrichtung 72 und einen Stromsensor 74 auf. Der Stromsensor 74 dient zur Messung des Stroms $I_M$. Hierbei kann eine Messung beispielsweise des Effektivwertes von $I_M$ erfolgen, bevorzugt wird aber eine Messung der Amplitude des sinusförmigen Stroms $I_M$ durch Bestimmung von dessen Maximalwert. Das Ergebnis der Messung des Stromsensors 74 wird der geregelten Spannungsversorgungseinrichtung 72 zugeführt.

Die geregelte Spannungsversorgungseinrichtung 72 umfasst eine Regeleinheit und eine von der Regeleinheit gesteuerte Spannungsversorgungseinheit (nicht dargestellt). Die Spannungsversorgungseinheit liefert eine Anregungsspannung $U_M$ nach den Vorgaben der Regeleinheit. Hierbei werden von der Regeleinheit unabhängig voneinander die Frequenz und die Amplitude der Anregungsspannung $U_M$ vorgegeben.

Die Frequenz der Anregungsspannung $U_M$ wird durch eine Phasenregelung (nicht dargestellt) so eingestellt, dass sich ein konstanter, vorgegebener Phasenwinkel zwischen $U_M$ und $I_M$ einstellt. Für einen bestimmten Phasenwinkel $\varphi_{OPT}$ entspricht dies einem Betrieb des Motors mit optimalen Wirkungsgrad. Eine entsprechende Phasenregelung ist beispielsweise in der De-A-100 08 937 beschrieben. Auf die dortige detaillierte Beschreibung soll hier lediglich verwiesen werden. Die Phasenregelung steuert den Motor jeweils mit einer solchen Frequenz an, dass er optimalen Wirkungsgrad hat. Dies ist der Fall, wenn der Resonator bei seiner mechanischen Resonanz angeregt wird. Die exakte Lage ist für den jeweiligen Motor von verschiedenen geometrischen und mechanischen Faktoren abhängig und muss daher für jede Anwendung bestimmt werden. Der Betriebspunkt mit optimalem Motorwirkungsgrad wird bei einem bestimmten, festen Phasenwinkel zwischen Anregungsspannung und Strom erreicht. Der jeweils aktuelle Phasenwinkel wird durch einen Phasendetektor ermittelt und die Frequenz der Anregungsspannung so vorgegeben, dass der Phasenwinkel sich auf den gewünschten Wert einstellt, der Motor also mit größtmöglichem Wirkungsgrad arbeitet.

Aufgrund der vorbeschriebenen Phasenregelung vereinfacht sich die in der ersten Ausführungsform nach Fig. 6 noch recht aufwendige Ermittlung der Wirkleistung. Da der Wert der Amplitude von $U_M$ ohnehin von der Regeleinheit vorgegeben wird und daher bekannt ist und der Phasenwinkel zusätzlich auf dem gewünschten Wert konstant gehalten wird, wird lediglich die Amplitude des Stroms $I_M$ durch den Stromsensor 74 gemessen und hieraus die Wirkleistung bestimmt.

Die Regeleinheit vergleicht den so ermittelten Wert für die Wirkleistung $P_M$ mit einem Vorgabewert und stellt die Amplitude von $U_M$ so ein, dass eine konstante Wirkleistung $P_M$ erreicht wird. Hierbei wird bei zu geringer Leistung die Spannung erhöht und bei höherer Leistung als der Vorgabewert die Spannung verringert. Dies kann beispielsweise herkömmlich durch Bildung einer Regeldifferenz und Einsatz eines bekannten Reglers, beispielsweise P-, PI- oder PID-Reglers, erfolgen.

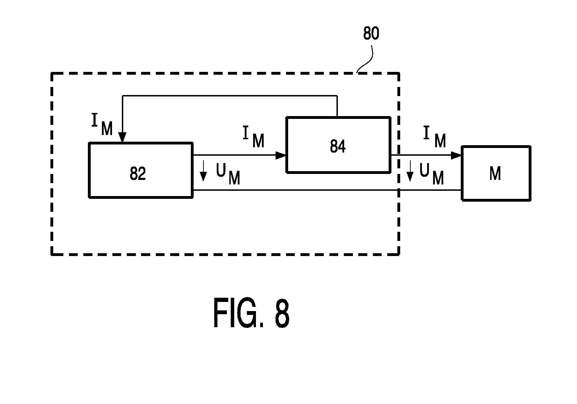

Fig. 8 zeigt eine dritte Ausführungsform der Erfindung. Hier wird der wiederum als Kästchen dargestellte Piezomotor M durch eine Ansteuerschaltung 80 mit einer Anregungsspannung $U_M$ versorgt, so dass ein Strom $I_M$ fließt.

Der strukturelle Aufbau entspricht der zweiten Ausführungsform nach Fig. 7. Der Strom $I_M$ wird durch einen Stromsensor 84 gemessen und dieser Messwert einer geregelten Stromversorgungseinrichtung 82 zugeführt. Die Stromversorgungseinrichtung 82 umfasst eine Regeleinheit und eine Spannungsversorgungseinheit (nicht dargestellt). Die Spannungsversorgungseinheit liefert die Anregungsspannung $U_M$ nach den Vorgaben der Regeleinheit.

Auch bei der dritten Ausführungsform umfasst die Regeleinheit die vorstehend in Verbindung mit der zweiten Ausführungsform beschriebene Phasenregelung, die einen konstanten Phasenwinkel zwischen der Anregungsspannung $U_M$ und dem Strom $I_M$ vorgibt.

Die dritte Ausführungsform unterscheidet sich aber von der zweiten Ausführungsform durch die Regelstrategie. Hier wird die dem Motor zugeführte elektrische Wirkleistung $P_M$ nicht mehr explizit bestimmt. Sondern die Regeleinheit verwendet als Regelgröße den Strom $I_M$ und stellt die Amplitude der Spannung $U_M$ so ein, dass der Strom $I_M$ auf einem konstanten Wert gehalten wird.

Auch ohne dass ein Wert für die Leistung ermittelt werden muss, ist hierbei sichergestellt, dass bei steigender Last die dem Motor zugeführte Leistung nicht absinkt. Denn wie aus der Diskussion im Zusammenhang mit den Ersatzschaltbildern 5a bis 5c erkennbar ist, führt ein erhöhtes Drehmoment zu einer Erhöhung der Gegenspannung $U_i$, so dass zur Beibehaltung eines konstanten Stroms $I_M$ eine Erhöhung der Amplitude der Spannung $U_M$ erforderlich ist. Da somit der Phasenwinkel φ (aufgrund der Phasenregelung s. o.) konstant ist, der Strom $I_M$ konstant geregelt wird und gleichzeitig die Spannung $U_M$ steigt, kommt es bei erhöhter Last zu einer Erhöhung der dem Motor zugeführten elektrischen Leistung.

Diese dritte Ausführungsform stellt die für eine Verwendung des Motors in einer Anwendung mit zu erwartenden starken Lastschwankungen bevorzugte Ausführungsform da. Denn bei konstantem Strom kann von weitgehend konstanter Antriebsgeschwindigkeit (z. B. Drehzahl) ausgegangen werden, wie sie beispielsweise für die Anwendung in einem elektrischen Rasierer notwendig ist.

Die Regeleinheit verarbeitet die vom Stromsensor 84 gelieferten Messwert für den Strom $I_M$ und bildet hieraus eine Regeldifferenz mit einem eingestellten Sollwert. Diese Regeldifferenz wird einem P-, PI- oder PID-Regler zugeführt, so dass hieraus eine Vorgabe für die Amplitude der Spannung $U_M$ so errechnet wird, dass die Regeldifferenz auf Null ausgeregelt wird.

Die Erfindung lässt sich dahingehend zusammenfassen, dass eine piezoelektrische Antriebsvorrichtung und ein Regelverfahren für eine solche Antriebsvorrichtung vorgestellt werden. Bisher bekannte piezoelektrische Antriebsvorrichtungen zeigen eine Charakteristik, bei der bei steigender Last die dem Motor zugeführte elektrische Leistung absinkt. Dieses Verhalten, das zu einer starken Einschränkung des Einsatzbereiches solcher Motoren führt, wird begegnet durch eine solche Vorgabe der Amplitude der Anregungsspannung, dass bei steigender Last die Wirkleistung nicht absinkt. Hierfür wird die elektrische Wirkleistung aus der Anregungsspannung und dem durch den piezoelektrischen Resonator fließenden Strom ermittelt. Alternativ kann bei vorgegebenem festen Phasenwinkel zwischen Anregungsspannung und Strom auch eine Regelung in der Weise erfolgen, dass der Strom auf einem konstanten Wert gehalten wird. Eine Weiterbildung der Erfindung bezieht sich auf eine Einrichtung zur Begrenzung des durch den piezoelektrischen Resonator fließenden Stroms, um eine Beschädigung dieses Bauteils zu vermeiden.

**Patentansprüche**

1. Piezoelektrische Antriebsvorrichtung mit

   - mindestens einem piezoelektrischen Resonator (10),
   - und einer Ansteuerschaltung (30, 60, 70, 80) zur Versorgung des Resonators (10) mit mindestens einer Anregungs-Wechselspannung ($U_M$) zur Anregung mechanischer Schwingungen,
   - und mit einer Einheit zur Ermittlung der dem Resonator (10) zugeführten Wirkleistung ($P_M$) aus der Anregungsspannung ($U_M$) und dem durch den piezoelektrischen Resonator (10) fließenden Strom ($I_M$),
   - wobei die Ansteuerschaltung (30, 60, 70, 80) so ausgebildet ist, dass sie im Betrieb der Antriebsvorrichtung eine solche Amplitude der Anregungsspannung vorgibt, dass die aufgenommene elektrische Wirkleistung ($P_M$) bei steigender Last nicht absinkt.

2. Antriebsvorrichtung nach Anspruch 1, bei der

   - die Einheit (64) zur Ermittlung der Wirkleistung ($P_M$) aus
   - der Amplitude der Anregungsspannung ($U_M$),
   - der Amplitude des durch den piezoelektrischen Resonator (10) fließenden Stroms ($I_M$),
   - und dem Phasenwinkel (φ) zwischen der Anregungsspannung ($U_M$) und den durch den piezoelektrischen Resonator fließenden Strom ($I_M$),
   - die aufgenommene elektrische Wirkleistung ($P_M$) ermittelt.

3. Antriebsvorrichtung nach Anspruch 1 oder 2, bei der

   - ein Sensor zur Messung der Geschwindigkeit eines angetriebenen Bewegungsgliedes (20) vorgesehen ist,
   - und abhängig von dem Messergebnis ein Vorgabewert für die elektrische Wirkleistung ($P_M$) ausgewählt wird.

4. Antriebsvorrichtung nach einem der vorangehenden Ansprüche, bei der

   - die Ansteuerschaltung (70, 80) eine solche Frequenz der Anregungsspannung vorgibt,
   - dass der Phasenwinkel (φ) zwischen der Anregungsspannung ($U_M$) und dem durch den piezoelektrischen Resonator (10) fließenden Strom ($I_M$) auf einen konstanten Wert gehalten ist.

5. Antriebsvorrichtung nach Anspruch 4, bei der

   - ein Stromsensor (74, 84) zur Messung des durch den piezoelektrischen Resonator (10) fließenden Stroms ($I_M$) vorgesehen ist,
   - wobei der Stromsensor (74, 84) den Maximalwert des durch den piezoelektrischen Resonator fließenden Stroms ($I_M$) misst.

6. Piezoelektrische Antriebsvorrichtung mit

   - mindestens einem piezoelektrischen Resonator (10),
   - und einer Ansteuerschaltung (80) zur Versorgung des Resonators (10) mit mindestens einer Anregungs-Wechselspannung ($U_M$) zur Anregung mechanischer Schwingungen,
   - mit einer Phasenregeleinheit, die die Frequenz der von der Ansteuerschaltung erzeugten Anregungsspannung so einstellt,
   - dass der Phasenwinkel ($\varphi$) zwischen der Anregungsspannung ($U_M$) und dem durch den piezoelektrischen Resonator fließenden Strom ($I_M$) auf einem konstanten Wert gehalten ist,
   - und einer Amplitudenregeleinheit, die durch Vorgabe der Amplitude der Anregungsspannung ($U_M$)
   - den durch den Resonator fließenden Strom ($I_M$) auf einen konstanten Wert regelt.

7. Antriebsvorrichtung nach einem der vorangehenden Ansprüche, bei der

   - eine Einrichtung zur Begrenzung des durch den piezoelektrischen Resonator (10) fließenden Stroms ($I_M$) vorgesehen ist.

8. Antriebsvorrichtung nach Anspruch 7, bei der

   - die Ansteuerschaltung (60) die Amplitude der Anregungsspannung ($U_M$) so regelt, dass der durch den piezoelektrischen Resonator (10) fließende Strom ($I_M$) eine obere Schwelle ($I_{MAX}$) nicht überschreitet.

9. Elektrischer Rasierer mit mindestens einer elektrischen Antriebsvorrichtung nach einem der Ansprüche 1 bis 8.

10. Regelverfahren für eine piezoelektrische Antriebsvorrichtung,

    - mit einem piezoelektrischen Resonator (10) und einer Ansteuerschaltung (30, 60, 70, 80) zur Versorgung des Resonators (10) mit mindestens einer Anregungsspannung ($U_M$) zur Erzeugung mechanischer Schwingungen,

   - bei dem die dem Resonator (10) zugeführte Wirkleistung ($P_M$) aus der Anregungsspannung ($U_M$) und dem durch den piezoelektrischen Resonator (10) fließenden Strom ($I_M$) ermittelt wird,
   - und die Amplitude der Anregungsspannung ($U_M$) so eingestellt wird, dass die Wirkleistung bei steigender Last nicht absinkt.

FIG. 1

FIG. 2

FIG. 3a

FIG. 3b

FIG. 4

EP 1 441 398 A1

FIG. 5a

FIG. 5b

FIG. 5c

13

## FIG. 6

```
                                    60

        I_peak   ↓ P_M    I_M              I_M            I_M
        ↓        ↓                                             ↓ U_M
    ┌────────┐      ┌────────┐   ┌──────────┐        ┌─────┐
    │   62   │ ↓U_M │   64   │   │    66    │        │  M  │
    └────────┘      └────────┘   └──────────┘        └─────┘
```

FIG. 6

## FIG. 7

```
                                70

            I_M           I_M              I_M
            ↓                                    ↓ U_M
        ┌────────┐     ┌──────────┐      ┌─────┐
        │   72   │↓U_M │    74    │      │  M  │
        └────────┘     └──────────┘      └─────┘
```

FIG. 7

FIG. 8

EP 1 441 398 A1

**Europäisches Patentamt**

**EUROPÄISCHER RECHERCHENBERICHT**

Nummer der Anmeldung

EP 03 10 0158

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 018, no. 155 (E-1524), 15. März 1994 (1994-03-15) & JP 05 328759 A (ASMO CO LTD), 10. Dezember 1993 (1993-12-10) | 1,7,8,10 | H01L41/04 B26B19/28 |
| A | * Zusammenfassung * -& JP 05 328759 A (ASMO CO LTD) 10. Dezember 1993 (1993-12-10) * Absatz '0007! – Absatz '0036!; Abbildungen 1-3,5 * | 5 | |
| X | EP 0 432 881 A (TOSHIBA KK) 19. Juni 1991 (1991-06-19) | 1,2,10 | |
| A | * Seite 4, Zeile 28 – Seite 7, Zeile 54; Abbildungen 1-7 * | 4,6 | |
| D,X | DE 38 35 090 A (MATSUSHITA ELECTRIC INDUSTRIAL CO LTD) 27. April 1989 (1989-04-27) | 6 | |
| A | * Spalte 9, Zeile 4 – Spalte 10, Zeile 12; Abbildungen 4,2B * | 1,4 | RECHERCHIERTE SACHGEBIETE (Int.Cl.7) H01L H02N B26B |
| A | EP 0 831 540 A (MATSUSHITA ELECTRIC INDUSTRIAL CO LTD) 25. März 1998 (1998-03-25) * Abbildungen 1,5,6,9; Beispiele 1,2 * | 1,3,10 | |
| A | PATENT ABSTRACTS OF JAPAN vol. 013, no. 092 (E-722), 3. März 1989 (1989-03-03) -& JP 63 268474 A (MATSUSHITA ELECTRIC IND CO LTD), 7. November 1988 (1988-11-07) * Zusammenfassung * | 1,4-6 | |

-/--

Der vorliegende Recherchenbericht wurde für alle Patentansprüche erstellt

| Recherchenort | Abschlußdatum der Recherche | Prüfer |
|---|---|---|
| MÜNCHEN | 23. September 2003 | Köpf, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

16

Europäisches
Patentamt

**EUROPÄISCHER RECHERCHENBERICHT**

Nummer der Anmeldung

EP 03 10 0158

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | DE 199 42 269 A (PHILIPS CORPORATE INTELLECTUAL PROPERTY GMBH) 8. März 2001 (2001-03-08) * Spalte 1, Zeile 23 - Spalte 5, Zeile 18 * * Spalte 5, Zeile 63 - Spalte 7, Zeile 17 * * Abbildungen 1,6 * --- | 1,6,9 | |
| A | US 5 130 619 A (IZUNO YUJI) 14. Juli 1992 (1992-07-14) * Spalte 6, Zeile 31 - Spalte 10, Zeile 2; Abbildungen 2,8,9 * --- | 1,6,10 | |
| E,L | DE 101 58 584 A (PHILIPS INTELLECTUAL PROPERTY & STANDARDS GMBH) 3. Juli 2003 (2003-07-03) L: Priorität * Ansprüche * ----- | 1-10 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 23. September 2003 | Köpf, C |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

**Europäisches**

**Patentamt**

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

**MANGELNDE EINHEITLICHKEIT DER ERFINDUNG ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-5, 7-10

   Ansteuerschaltung für eine piezoelektrische Antriebsvorrichtung mit einer Einheit zur Ermittlung der dem piezoelektrischen Resonator zugeführten Wirkleistung aus Anregungsspannung und Strom sowie Regelverfahren der Amplitude der Anregungsspannung dass die Wirkleistung bei steigender Last nicht absinkt

2. Ansprüche: 6-9

   Ansteuerschaltung für eine piezoelektrische Antriebsvorrichtung mit einer Phasenregeleinheit, die die Frequenz der Anregungsspannung des Resonators so einstellt, dass der Phasenwinkel zwischen Anregungsspannung und Strom konstant ist, und einer Amplitudenregeleinheit, die durch Vorgabe der Amplitude der Anregungsspannung den Strom auf einen konstanten Wert regelt

## ANHANG ZUM EUROPÄISCHEN RECHERCHENBERICHT
## ÜBER DIE EUROPÄISCHE PATENTANMELDUNG NR.  EP 03 10 0158

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-09-2003

| Im Recherchenbericht angeführtes Patentdokument | Datum der Veröffentlichung | Mitglied(er) der Patentfamilie | Datum der Veröffentlichung |
|---|---|---|---|
| JP 05328759 A | 10-12-1993 | KEINE | |
| EP 0432881 A | 19-06-1991 | JP 2770295 B2 | 25-06-1998 |
| | | JP 3223014 A | 02-10-1991 |
| | | EP 0432881 A1 | 19-06-1991 |
| | | US 5080218 A | 14-01-1992 |
| DE 3835090 A | 27-04-1989 | JP 1107671 A | 25-04-1989 |
| | | JP 2532516 B2 | 11-09-1996 |
| | | JP 1107672 A | 25-04-1989 |
| | | DE 3835090 A1 | 27-04-1989 |
| | | US 4888514 A | 19-12-1989 |
| EP 0831540 A | 25-03-1998 | JP 3263245 B2 | 04-03-2002 |
| | | JP 8033365 A | 02-02-1996 |
| | | JP 3260041 B2 | 25-02-2002 |
| | | JP 8033366 A | 02-02-1996 |
| | | JP 8047269 A | 16-02-1996 |
| | | EP 0831540 A1 | 25-03-1998 |
| | | DE 69506187 D1 | 07-01-1999 |
| | | DE 69506187 T2 | 06-05-1999 |
| | | DE 69516908 D1 | 15-06-2000 |
| | | DE 69516908 T2 | 12-10-2000 |
| | | EP 0693821 A1 | 24-01-1996 |
| | | KR 228610 B1 | 01-11-1999 |
| | | US 5644199 A | 01-07-1997 |
| JP 63268474 A | 07-11-1988 | JP 2574293 B2 | 22-01-1997 |
| DE 19942269 A | 08-03-2001 | DE 19942269 A1 | 08-03-2001 |
| | | CN 1287405 A | 14-03-2001 |
| | | EP 1081772 A2 | 07-03-2001 |
| | | JP 2001137780 A | 22-05-2001 |
| US 5130619 A | 14-07-1992 | JP 4222476 A | 12-08-1992 |
| | | JP 4222477 A | 12-08-1992 |
| | | DE 4107802 A1 | 02-07-1992 |
| DE 10158584 A | 03-07-2003 | DE 10158584 A1 | 03-07-2003 |
| | | CN 1423405 A | 11-06-2003 |
| | | JP 2003230291 A | 15-08-2003 |

Für nähere Einzelheiten zu diesem Anhang : siehe Amtsblatt des Europäischen Patentamts, Nr.12/82

20